# EUROPEAN PATENT APPLICATION

(11) **EP 4 357 071 A1**
(43) Date of publication of application: **24.04.2024**
(21) Application number: 22824847.2
(22) Date of filing: 06.06.2022
(51) Int. Cl.: B23Q 1/52, B23Q 1/26, F16C 19/22, F16C 35/06

(54) **ROTARY TABLE AND MACHINE TOOL EQUIPPED THEREWITH**

(30) Priority: 18.06.2021 JP 2021102004
(71) Applicant: Makino Milling Machine Co., Ltd., Tokyo 152-8578 (JP)
(72) Inventor: KOBAYASHI, Satoshi, Aiko-gun, Kanagawa 243-0303 (JP)
(74) Representative: McWilliams, David John
(86) International application number: PCT/JP2022/022819
(87) International publication number: WO 2022/264855

(57) **Abstract**

A rotary table (10) includes a housing (16) including a cylindrical holding part (46) extending along a first axis (Ob) direction, a pallet stand (44) including a flange part (52), which is formed along an outer periphery thereof, and which rotates about the first axis (Ob) with respect to the holding part (46) together with a pallet (36), a roller bearing (42) which is arranged in the housing (16) and which rotatably supports the pallet stand (44), a motor (40) which drives the rotation of the pallet stand (44), and a support member (56) which is arranged on the rear side of the flange part (52) in the first axis (Ob) direction, which has a sliding surface (56A) at a front end thereof in the first axis (Ob) direction, and which is configured to be movable forward and rearward along the first axis (Ob) direction, wherein the sliding surface (56A) contacts the flange part (52) when advanced and separates from the flange part (52) when retracted.

## Description

### FIELD

The present invention relates to a rotary table and a machine tool equipped therewith.

### BACKGROUND

Patent Literature 1 discloses a rotary table which is mounted on the bed of a machine tool via a table base and which includes a rotating stand which is supported by the table base so as to be capable of rotating about the vertical axis via bearing means. The rotating stand has a lower sliding surface which is formed between it and the table base, and an upper sliding surface which is formed on an upper side opposite the lower sliding surface in the vertical direction and which is pressed from above by a pressing plate arranged on the upper side thereof. The lower sliding surface and the upper sliding surface of the rotating stand are in sliding contact with the table base and the pressing plate, respectively, and are interposed therebetween, thereby suppressing lifting in the vertical direction and improving the mechanical rigidity of the rotary table.

However, according to the rotary table described in Patent Literature 1, since the rotating stand is in sliding contact via the lower sliding surface and the upper sliding surface, resistance between the lower and upper sliding surfaces of the rotating stand and the table base and pressing plate may increase, whereby the mechanical load on the drive motor which rotates the rotary table may increase. When the resistance increases, for example, when rotating the rotating stand at high speed for high-speed cutting, the amount of heat generated by the sliding surface and drive motor increases, causing thermal deformation, which may affect machining accuracy or cause failures such as burning of the sliding surface. Thus, when performing both cutting and high-speed turning on one workpiece, it may be necessary to perform each process using a separate machine tool, which may lead to an increase in the number of operation steps.

### [CITATION LIST]

### [PATENT LITERATURE]

[PTL 1] Japanese Unexamined Patent Publication (Kokai) No. H6-339827

### SUMMARY

### [TECHNICAL PROBLEM]

An object of the present invention is to provide a rotary table with which machine rigidity during cutting can be secured and which can rotate at high speed during turning, and a machine tool comprising the rotary table.

### [SOLUTION TO PROBLEM]

According to the present invention, there is provided A rotary table which rotates a workpiece mounted on a table or pallet by rotating the table or pallet, the rotary table comprising a housing including a cylindrical holding part extending along a first axis direction, a rotary member comprising a flange part, which is formed along an outer periphery thereof, and which rotates about the first axis with respect to the holding part together with the table or the pallet arranged on the front side in the first axis direction, a roller bearing which is arranged in the housing and which rotatably supports the rotary member, a motor which drives the rotation of the rotary member, and a support member which is arranged in the housing on the rear side of the flange part in the first axis direction, which has a sliding surface at a front end thereof in the first axis direction, and which is configured to be movable forward and rearward along the first axis direction, wherein the sliding surface contacts the flange part when the support member is advanced and separates from the flange part when it is retracted.

### [ADVANTAGEOUS EFFECTS OF INVENTION]

The rotary member supported by the roller bearing and driven by the motor rotates about the first axis relative to the holding part of the housing, whereby the table or pallet arranged on the front side of the rotary member in the first axis direction rotates. The housing comprises the support member, and the support member is configured so as to be movable forward and rearward along the first axis direction. When the support member is moved forward, the sliding surface of the support member contacts the flange part. Thus, the rotary member can be supported by the support member, whereby the mechanical rigidity of the rotary member can be improved. Furthermore, when the support member is retracted, it separates from flange part. Thus, the rotary member does not cause friction with the support member when rotating, and as a result, the rotary member and the table or pallet can be rotated faster with the same drive force. As a result, a rotary table with which mechanical rigidity can be secured and which can be rotated at high speed can be provided.

According to the rotary table according to the present invention and machine tool equipped therewith, mechanical rigidity during cutting can be secured and rotation can be performed at high speed during turning.

### BRIEF DESCRIPTION OF DRAWINGS

FIG. 1 shows a schematic side view of a machine tool comprising a rotary table according to the present embodiment.
FIG. 2 shows a cross-sectional view of the rotary table according to the present embodiment during cutting.
FIG. 3 shows a cross-sectional view of the rotary table according to the present embodiment during turning.

### DESCRIPTION OF EMBODIMENTS

The rotary table according to an embodiment will be described below with reference to the attached drawings. Identical or corresponding elements have been assigned the same reference signs, and duplicate descriptions thereof have been omitted. In order to facilitate understanding, the scales of the drawings have been changed in some cases.

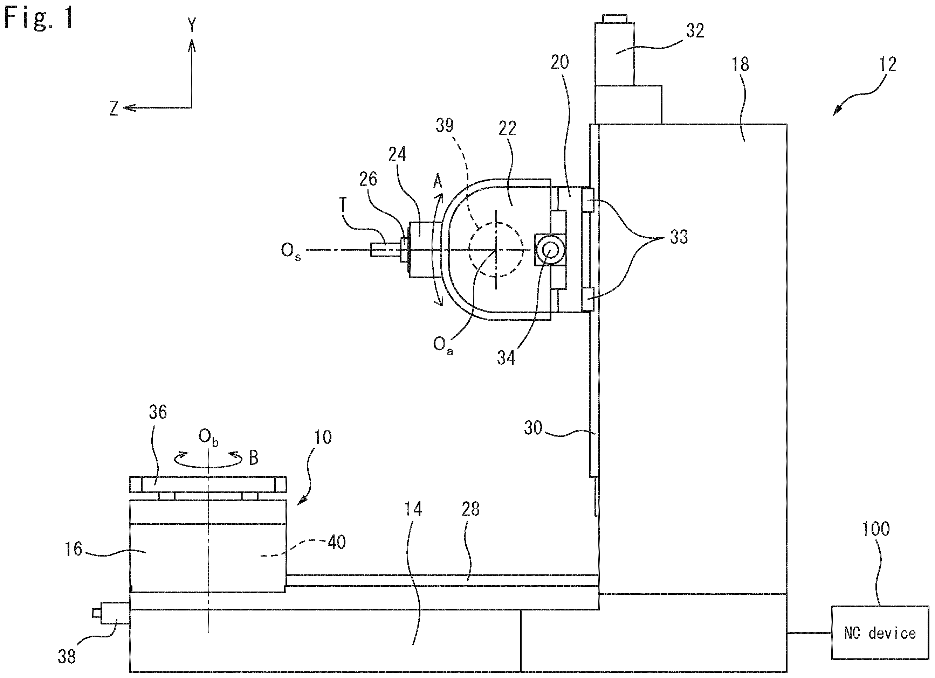

FIG. 1 shows a machine tool 12 comprising a rotary table 10 according to the present embodiment. In the drawings, the arrows indicate the machine vertical direction and machine longitudinal direction when the machine tool 12 is arranged on a horizontal plane. Y in the drawings represents the upper side of the machine, and Z represents the front side of the machine. Furthermore, in the horizontal plane, the direction perpendicular to the longitudinal direction of the machine is referred to as the lateral direction of the machine (the direction perpendicular to the paper surface of FIG. 1).

The machine tool 12 comprises a bed 14 as a base installed on the floor of a factory, a housing 16 of the rotary table 10 which is disposed on the top surface of the bed 14 on the front side of the machine (the left side in FIG. 1) so as to be movable in the front-rear direction of the machine, and a column 18 which stands and is affixed on the upper surface of the machine rear side (right side in FIG. 1) of the bed 14. The machine tool 12 further comprises a Y-axis slider 20 which is disposed on the front side of the column 18 and which is movable in the machine vertical direction (Y-axis direction), an X-axis slider 22 which is disposed on the machine front side of the Y-axis slider 20 so as to be movable in the lateral direction of the machine (horizontal left-right direction), and a spindle head 24 which is attached to the X-axis slider 22 and rotatably supports a spindle 26.

The housing 16 is disposed on the upper surface of the bed 14 so as to be capable of reciprocating along a pair of Z-axis guide rails 28 extending along the machine longitudinal direction (Z-axis direction), and a pallet 36 for affixation of a workpiece (illustration omitted) is attached to the upper surface of the housing 16. In the present embodiment, the housing 16 includes a motor 40 for driving the rotation of the housing 16, and the pallet 36 is configured to be capable of rotating about the first axis Ob (direction B) extending in the vertical direction.

The bed 14 comprises a ball screw (illustration omitted) extending in the Z-axis direction as a Z-axis feed device which reciprocates the housing 16 along the Z-axis guide rail 28, and a Z-axis servo motor 38 which is connected to one end of the ball screw. Furthermore, a nut (illustration omitted) which engages with the ball screw is attached to the housing 16.

The Y-axis slider 20 is configured so as to be capable of reciprocating along a pair of Y-axis guide rails 30 extending in the machine vertical direction (vertical direction) on the front surface of the column 18. The column 18 comprises a ball screw (illustration omitted) extending in the Y-axis direction as a Y-axis feed device which reciprocates the Y-axis slider 20 along the Y-axis guide rail 30; and a Y-axis servo motor 32 connected to one end, in this embodiment, the upper end, of the pair of ball screws. Furthermore, a nut (illustration omitted) that engages with a ball screw is attached to the Y-axis slider 20.

The X-axis slider 22 is disposed on the front surface of the Y-axis slider 20 so as to be capable of reciprocating along a pair of X-axis guide rails 33 extending in the machine lateral direction (X-axis direction). The Y-axis slider 20 comprises a ball screw (illustration omitted) extending in the X-axis direction as an X-axis feed device which reciprocates the X-axis slider 22 along the X-axis guide rails 33, and an X-axis servo motor 34 which is connected to one end of the ball screw. Further, a nut (illustration omitted) which engages with the ball screw is attached to the X-axis slider 22.

The X-axis slider 22 has a pair of A-axis arms protruding forward in the Z-axis direction, and the spindle head 24 is supported between the A-axis arms so as to be rotatable about a tilt axis Oa (in the A direction) parallel to the X-axis. An A-axis servo motor 39 is incorporated into one of the A-axis arms to rotate the spindle head 24 about the tilt axis Oa (in the A direction). The spindle head 24 supports the spindle 26 so as to be rotatable around center axis Os, and is configured to be capable of driving the spindle 26 rotationally by means of an incorporated servo motor (illustration omitted).

In this manner, the machine tool 12 is configured so as to machine a workpiece by controlling linear motion along the X-axis, Y-axis, and Z-axis and rotational motion about the Oa-axis and Ob-axis by means of the NC device 100, and relatively moving the tool T, which is attached to the tip of the spindle 26, and the workpiece, which is affixed to the pallet 36 and attached to the housing 16 together with the pallet 36.

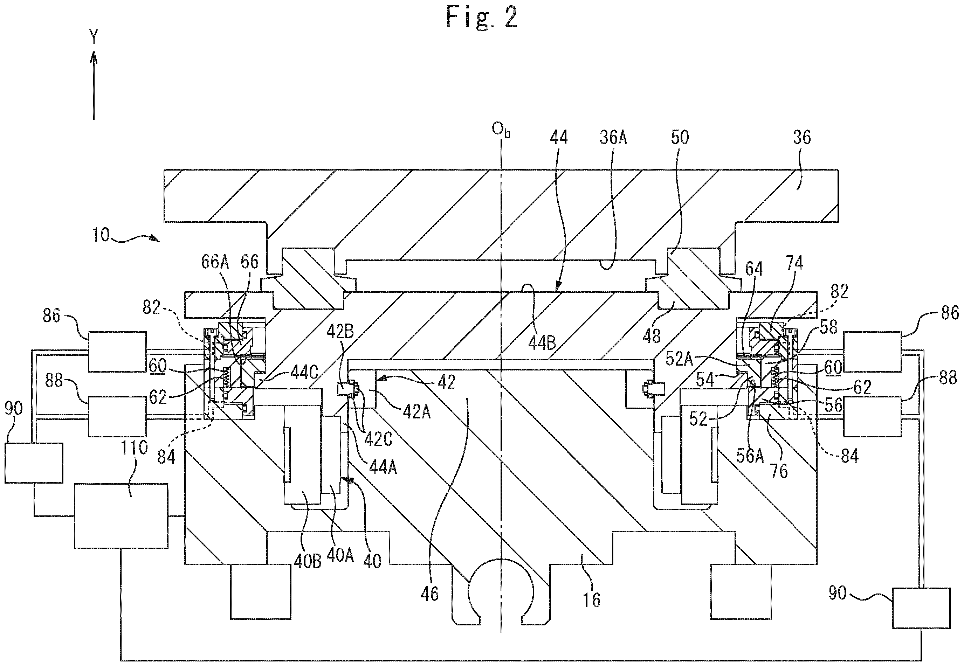

FIG. 2 shows a cross-sectional view of the rotary table 10 according to the present embodiment taken along the machine vertical direction during cutting. The rotary table 10 comprises the housing 16 having a cylindrical outer circumferential shape and an internal space, and a pallet stand 44 as a rotary member rotatably attached to the housing 16 via a roller bearing 42. Specifically, a cylindrical holding part 46 extending in the first axis Ob direction is formed on the central side of the housing 16. An inner ring part 42A of the roller bearing 42 is arranged on the outer periphery of the holding part 46 on the upper side of the machine, and an outer ring part 42B of the roller bearing 42 is arranged on the inner periphery of the pallet stand 44 in a part facing the holding part 46. Thus, the pallet stand 44 is configured to be rotatable about the first axis Ob of the holding part 46 via a bearing roller 42C.

A rotor 40A of the motor 40 for rotationally driving the pallet stand 44 is attached to a base end 44A of the pallet stand 44, which protrudes into the interior of the housing 16. A stator 40B of the motor 40 is arranged in the housing on the radially outer side of the rotary table 10 than the rotor 40A so as to face the rotor 40A. The rotor 40A and the stator 40B form an incorporated motor for rotationally driving the pallet stand 44, which is arranged inside the housing 16. A rotational position sensor (illustration omitted) such as a rotary encoder for reading the rotational position relative to the first axis Ob may be attached to the pallet stand 44. Though the following description assumes that an incorporated motor is provided, the invention is not limited to such an aspect, and the pallet stand may be rotationally driven using, for example, a well-known motor and gear train.

A plurality of positioning taper cones 48 for positioning the pallet 36 relative to the pallet stand 44 are attached to the upper surface 44B of the pallet stand 44 at equal intervals along the circumferential direction of the pallet stand 44. A plurality of taper bushes 50 which fit or engage with the taper cones 48 are attached to the lower surface 36A of the pallet 36, which faces the upper surface 44B of the pallet stand 44 along the machine vertical direction, at the same angular intervals as the taper cones 48 along the circumferential direction of the pallet 36. Furthermore, a pull stud (illustration omitted) which is attached to the center of the taper cone 48 and extends toward the lower side of the machine is arranged on the lower surface 36A of the pallet 36. The pallet 36 is affixed to the pallet stand 44 by pulling the pull stud toward the pallet stand 44 by means of a clamp device (illustration omitted) disposed on the pallet stand 44. In the present embodiment, an aspect of the rotary table 10 in which the pallet 36 and the pallet stand 44 are separated and the pallets can be exchanged will be described. However, the rotary table 10 is not limited to this, and the rotary table 10 may be configured as an integrated table in which the pallet and the pallet stand cannot be separated.

The pallet stand 44 has a flange part 52 formed along the circumferential direction of the pallet stand 44 on the lower side of the machine, and the flange part 52 is configured so as to be detachable from the pallet stand 44. Specifically, the flange part 52 includes an upper protrusion 52A that protrudes radially inward of the pallet stand 44 on the upper side of the machine. A lower protrusion 44C which protrudes radially outward on the lower side of the machine than the upper protrusion 52A is formed on the pallet stand 44, and the flange part 52 is arranged on the pallet stand 44 in a state in which the upper protrusion 52A is mounted on the lower protrusion 44C of the pallet stand 44.

A spacer member 54 can be arranged between the upper protrusion 52A and the lower protrusion 44C along the upper surface of the lower protrusion 44C of the pallet stand 44. By selecting a spacer member 54 having an appropriate thickness from among spacer members 54 of different thicknesses, or adjusting the thickness of the spacer member 54 with a grinder, and attaching the spacer member 54 to the upper surface of the lower protrusion 44C, the flange part 52 can be arranged on the pallet stand 44 by adjusting (raising or lowering) the position in the machine vertical direction. The spacer member 54 is formed into a plate shape having a thickness (height) in the machine vertical direction which is less than the thickness (height) of the upper protrusion 52A and the lower protrusion 44C.

A support member 56 which is arranged below the flange part 52, which is formed along the outer periphery of the pallet stand 44, and which has a sliding surface 56A on the upper surface is arranged in the housing 16. The support member 56 is configured so as to be movable upward and downward along the first axis Ob direction (machine up and down directions). Thus, when the support member 56 is raised (advanced) toward the upper and lower sides of the machine, the sliding surface 56A thereof can be brought into contact with the lower surface of the flange part 52 on the radially inner side. Furthermore, the support member 56 is configured so as to separate from the flange part 52 when retracted toward the lower side of the machine.

A stopper member 58 is arranged in the housing 16 on the radially outer side of the pallet stand 44 along the outer periphery of the flange part 52. The inner peripheral side of the stopper member 58 extends along the radial direction of the pallet stand 44 to the front side of the support member 56 in the first axis Ob direction. A first biasing means accommodating part 60 which opens toward the support member 56 and which has a space extending toward the upper side of the machine along the first axis Ob direction is formed in the interior of the stopper member 58 facing the support member 56 along the machine vertical direction. A first biasing means 62 for biasing the support member 56 toward the lower side of the machine is arranged inside the first biasing means accommodating part 60. As a result, the support member 56 can be lowered to the lower side of the machine and the support member 56 can be separated from the flange part 52. In the present embodiment, the first biasing means 62 is configured using a spring. Note that in the following description, an aspect in which the first biasing means 62 is configured using a spring will be described, but the first biasing means 62 is not limited to this, and other actuating means such as a hydraulic or pneumatic actuator may also be used.

The housing 16 comprises a first pressurizing means 84 for pressurizing the support member 56 to raise it toward the upper side of the machine and press it against the flange part 52. The first pressurizing means 84 includes a solenoid valve 88 and a hydraulic pump 90, which are connected to the lower side of the support member 56 via a pipe. Thus, by opening the solenoid valve 88, the hydraulic pressure from the hydraulic pump 90 can be applied (pressurized) to the support member 56, and the support member 56 can be raised toward the upper side of the machine. In the following description, an aspect in which the first pressurizing means 84 is a means for pressurizing using oil pressure from the hydraulic pump 90 will be described, but the first pressurizing means 84 is not limited to this, and other means such as pressurizing using air pressure using an air compressor may be used.

A thin disk member 64 which is formed along the outer periphery of the pallet stand 44 and which is affixed to the pallet stand 44 is arranged on the flange part 52 and the stopper member 58 on the upper side of the machine (the front side in the first axis Ob direction). The disk member 64 is formed such that the thickness (height) thereof in the machine vertical direction is less than the thickness (height) of the upper protrusion 52A of the flange part 52.

A pressing member 66 which is arranged on the machine upper side (the front side in the first axis Ob direction) of the disk member 64, which has a contact surface 66A on the lower surface thereof, and which is configured so as to be movable upward and downward along the first axis Ob direction is arranged in the housing 16. Thus, when the pressing member 66 is lowered (retracted) along the first axis Ob direction, the contact surface 66A contacts the upper surface of the disk member 64, and the lower surface of the disk member 64 contacts the stopper member 58. As a result, the disk member 64 is held and clamped by the pressing member 66 and the stopper member 58. Furthermore, the pressing member 66 is configured so as to separate from the disk member 64 when raised (advanced).

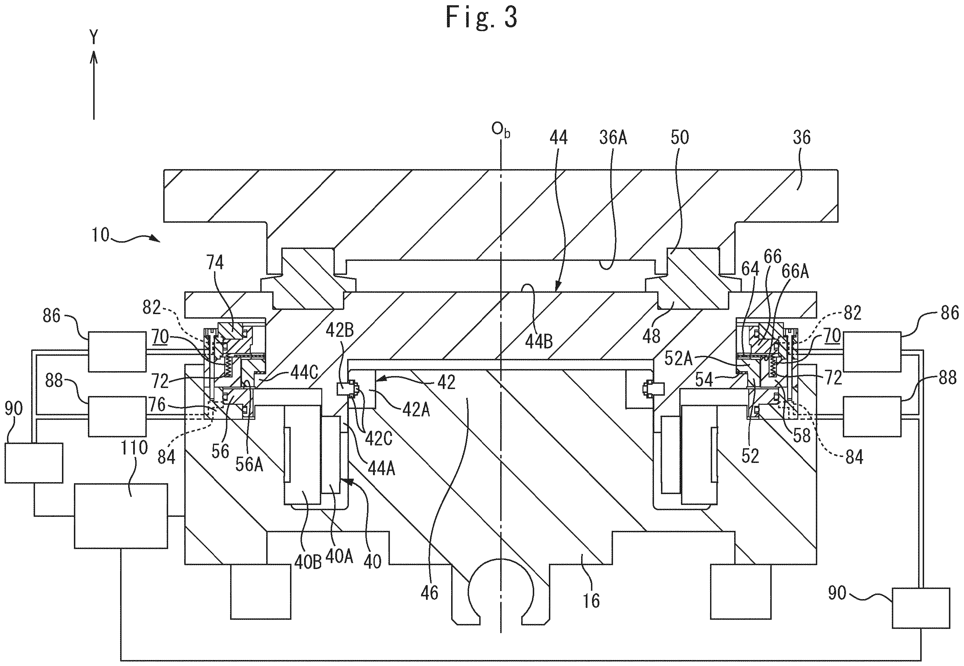

FIG. 3 shows a cross-sectional view of the rotary table 10 according to the present embodiment during turning. The cross-sectional view of FIG. 3 is a cross-sectional view taken at a position offset by a predetermined angle along the circumferential direction of the pallet stand 44 from the cutting position of the cross-sectional view shown in FIG. 2. A second biasing means accommodating part 70 which opens toward the pressing member 66 and which has a space extending toward the lower side of the machine along the first axis Ob direction is formed in the interior of the stopper member 58 facing the pressing member 66 along the machine vertical direction. A second biasing means 72 for biasing the pressing member 66 so as to move upward and downward is arranged inside the second biasing means accommodating part 70. As a result, the pressing member 66 can be raised to the upper side of the machine, whereby the pressing member 66 can be separated from the disk member 64. In the present embodiment, the second biasing means 72 is configured using a spring. In the following description, an aspect in which the second biasing means 72 is configured using a spring will be described, but the second biasing means 72 is not limited to this, and other actuating means such as a hydraulic or pneumatic actuator may also be used.

The housing 16 comprises a second pressurizing means 82 for pressurizing the pressing member 66 to lower it toward the lower side of the machine and press it against the disk member 64. The second pressurizing means 82 comprises a solenoid valve 86 and a hydraulic pump 90, which are connected to the upper side of the pressing member 66 via a pipe. Thus, by opening the solenoid valve 6, hydraulic pressure from the hydraulic pump 90 can be applied (pressurized) to the pressing member 66, and the pressing member 66 can be lowered toward the lower side of the machine. In the following description, an aspect in which the second pressurizing means 82 is means for pressurizing with the hydraulic pump 90 will be described, but the second pressurizing means 82 is not limited to this, and other means such as pressurizing with air pressure using an air compressor may be used.

An upper restraining part 74 of the housing 16 is formed integrally with the stopper member 58 on the machine upper side of the pressing member 66. As a result, the pressing member 66 can be prevented from rising excessively toward the upper side of the machine. Furthermore, a lower restraining part 76 of the housing 16 is formed integrally with the stopper member 58 on the machine lower side of the support member 56. As a result, the support member 56 can be prevented from descending excessively toward the lower side of the machine.

The rotary table 10 comprises a controller 110 for controlling vertical movement of the support member 56 and the pressing member 66 along the machine vertical direction (first axis Ob direction). Specifically, the controller 110 operates the first pressurizing means 84 to pressurize the support member 56 to raise it toward the upper side of the machine and press it against the flange part 52. Since the support member 56 is pressurized with a force (pressure) greater than the biasing force of the first biasing means 62, the first biasing means 62 is pressed (pushed) toward the interior of the first biasing means accommodating part 60. When the operation of the first pressurizing means 84 is stopped (no longer pressurized), the support member 56 pressed toward the lower side of the machine by the biasing force (spring force) of the first biasing means 62 is lowered and separated from the flange part 52. The controller 110 also operates the second pressurizing means 82 to pressurize the pressing member 66 to lower it toward the lower side of the machine and press it against the disk member 64. Since the pressing member 66 is pressed with a force (pressure) greater than the biasing force of the second biasing means 72, the second biasing means 72 is pressed (pushed) toward the inside of the second biasing means accommodating part 70. When the operation of the second pressurizing means 82 is stopped (no longer pressurized), the pressing member 66 pressed toward the upper side of the machine by the biasing force (spring force) of the second biasing means 72 rises and separates from disk member 64. Note that although an aspect in which the controller 110 is provided separately from the NC device 100 has been described, the controller is not limited to this, and the controller may be integrated into the NC device.

The mode of operation and effects of the rotary table 10 according to the present embodiment will be described.

The rotary table 10 is configured so as to be able to be switched to a rotation mode or an indexing mode depending on the objective of machining by being operated by a controller 110. Herein, the rotation mode has two modes: a high-speed rotation mode and a low-speed rotation mode.

As shown in FIG. 3, in the high-speed rotation mode, the controller 110 operates the first actuating means 62 to lower the support member 56 toward the lower side of the machine, and actuates the second actuating means 72 to raise the pressing member 66 toward the upper side of the machine. Thus, the support member 56 is separated from the flange part 52 of the pallet stand 44. Furthermore, the pressing member 66 is separated from the disk member 64. As a result, there is nothing that contacts the pallet stand 44 on the outer circumferential side of the pallet stand 44, and no drag such as friction acts thereon, whereby the pallet stand 44 can be rotated at high speed at the rotation speed commanded by the motor 40, and turning can be performed at high speed.

In the low-speed rotation mode, the controller 110 operates the second actuating means 72 to raise the pressing member 66 toward the upper side of the machine, and operates the first actuating means 62 to raise the support member 56 toward the upper side of the machine. Thus, while the pressing member 66 is separated from the disk member 64, the support member 56 contacts the flange part 52 of the pallet stand 44 via the sliding surface 56A thereof. As a result, the flange part 52 and the stopper member 58 are pressed by the support member 56, and the pallet stand 44 is supported by the support member 56, whereby the mechanical rigidity of the pallet stand 44 can be improved.

Since rotation of the pallet stand 44 can be suppressed by the frictional force generated between the sliding surface 56A of the support member 56 and the lower surface of the flange part 52, the rotary member can be positioned at a commanded rotation angle. In the low-speed rotation mode, the pallet stand 44 can be rotated at a relatively low rotation speed as compared to the high-speed rotation mode while a certain amount of frictional force is generated between it and the sliding surface 56A of the support member 56, and turning can also be performed.

As shown in FIG. 2, in the indexing mode, the controller 110 operates the first actuating means 62 to raise the support member 56 toward the upper side of the machine, and actuates the second actuating means 72 to lower the pressing member 66 toward the lower side of the machine. Thus, the support member 56 contacts the flange part 52 of the pallet stand 44 via the sliding surface 56A thereof, and the pressing member 66 contacts the disk member 64 via the contact surface 66A thereof. The flange part 52 and the stopper member 58 are pressed by the support member 56, and the pallet stand 44 is supported by the support member 56. As a result, since it is supported by the support member 56, the mechanical rigidity of the pallet stand 44 can be improved. Furthermore, after the pallet stand 44 is indexed to the commanded rotation angle, the disk member 64 is held and clamped by the pressing member 66 and the stopper member 58. As a result, the pressing force along the machine vertical direction from the pressing member 66 and the stopper member 58 and the frictional force between them act on the pallet stand 44 via the disk member 64, whereby a shift in the rotational angle of the pallet stand 44 in the direction of rotation is suppressed. As a result, in machining with a high load due to cutting force, the mechanical rigidity required during cutting can be secured, and the position of the rotary member can be maintained with high accuracy at the commanded rotation angle.

As described above, the rotary table 10 according to the present embodiment can ensure mechanical rigidity during cutting and rotation at high speeds during turning.

Furthermore, the stopper member 58 is arranged in the housing 16 on the outside of the pallet stand 44 in the radial direction, and is formed along the circumferential direction of the flange part 52. Thus, the support member 56 can be prevented from rising excessively toward the upper side of the machine and from exerting an excessive pressing force on the flange part 52. The pressing force is adjusted by adjusting the thickness of the spacer member 54 and by shifting the position of the flange part 52 in the machine vertical direction. When the position of the flange part 52 is shifted upward in the machine vertical direction, the force with which the support member 56 presses the flange part 52 decreases, and the force with which the support member 56 presses the stopper part 58 increases. Further, when the position of the flange part 52 in the machine vertical direction is shifted downward, the force with which the support member 56 presses the flange part 52 increases, and the force with which the support member 56 presses the stopper part 58 decreases.

On the machine upper side of the pressing member 66, the upper restraining part 74 of the housing 16 is formed integrally with the stopper member 58, and can suppress the pressing member 66 from rising excessively toward the upper side of the machine. Further, on the machine lower side of the support member 56, the lower restraining part 76 of the housing 16 is formed integrally with the stopper member 58, and can prevent the support member 56 from descending excessively to the lower side of the machine. Furthermore, since excessive displacement of the flange part 52 arranged between the support member 56 and the pressing member 66 in the machine vertical direction can be suppressed, inclination of the pallet stand 44 relative to the horizontal direction can be prevented.

Though the embodiments of the rotary table 10 have been described, the present invention is not limited to the above embodiments. Various modifications of the embodiments described above are included in the embodiments of the present invention within the scope which could be conceived of by a person skilled in the art.

### REFERENCE SIGNS LIST

- 10: rotary table
- 12: machine tool
- 16: housing
- 36: pallet
- 40: motor
- 42: roller bearing
- 44: pallet stand (rotary member)
- 46: holding part
- 52: flange part
- 54: spacer member
- 56: support member
- 56A: sliding surface
- 58: stopper member
- 64: disk member
- 66: pressing member
- 66A: contact surface
- 110: controller
- Ob: first axis

## Claims

1. A rotary table which rotates a workpiece mounted on a table or pallet by rotating the table or pallet, the rotary table comprising:
a housing including a cylindrical holding part extending along a first axis direction,
a rotary member comprising a flange part, which is formed along an outer periphery thereof, and which rotates about the first axis with respect to the holding part together with the table or the pallet arranged on the front side in the first axis direction,
a roller bearing which is arranged in the housing and which rotatably supports the rotary member,
a motor which drives the rotation of the rotary member, and
a support member which is arranged in the housing on the rear side of the flange part in the first axis direction, which has a sliding surface at a front end thereof in the first axis direction, and which is configured to be movable forward and rearward along the first axis direction, wherein the sliding surface contacts the flange part when the support member is advanced and separates from the flange part when it is retracted.

2. The rotary table according to claim 1, wherein the flange part is configured so as to be detachable from the rotary member, and to be offset in the front-rear direction in the first axis direction by arranging a spacer member between the rotary member and the flange part.

3. The rotary table according to claim 1, further comprising:
a thin disk member which is formed along the outer periphery of the rotary member on the front side of the flange part in the first axis direction and which is affixed to the rotary member, and
a pressing member which is arranged in the housing on the front side of the disk member in the first axis direction, which has a contact surface at a rear end thereof in the first axis direction, and which is configured to be movable forward and rearward along the first axis direction, wherein the contact surface contacts the disk member when retracted and separates from the disk member when advanced.

4. The rotary table according to claim 1, further comprising a stopper member which is formed in the housing along a circumferential direction of the rotary member, wherein an inner peripheral side thereof extends along the radial direction to the front side of the support member in the first axis direction.

5. The rotary table according to claim 1, further comprising a controller for controlling the rotary table, wherein the controller is configured so as to be switchable between:
a rotation mode in which the support member is operated to retract, whereby the support member is separated from the flange part and the rotary member is rotated at a predetermined rotation speed, and
an indexing mode in which the support member is operated to advance, whereby the flange part is supported by the support member and the rotary member is positioned at a predetermined rotation angle.

6. A machine tool comprising the rotary table according to any one of claims 1 to 5.
